# EUROPÄISCHE PATENTSCHRIFT

(11) **EP 2 337 518 B1**
(45) Veröffentlichungstag und Bekanntmachung des Hinweises auf die Patenterteilung: **27.03.2013**
(21) Anmeldenummer: 09799308.3
(22) Anmeldetag: 11.12.2009
(51) Int. Cl.: A61C 8/00

(54) **ZAHNIMPLANTAT**
TOOTH IMPLANT
IMPLANT DENTAIRE

(30) Priorität: 12.12.2008 DE 102008054588; 08.05.2009 DE 102009002947
(43) Veröffentlichungstag der Anmeldung: 29.06.2011
(73) Patentinhaber: Mehrhof Implant Technologies GmbH, 10553 Berlin (DE)
(72) Erfinder: MEHRHOF, Jürgen, 14129 Berlin (DE)
(74) Vertreter: Müller Schupfner & Partner
(86) Internationale Anmeldenummer: PCT/EP2009/066899
(87) Internationale Veröffentlichungsnummer: WO 2010/066871

(56) Entgegenhaltungen:
- DE-A1- 19 509 118
- US-A- 4 756 689
- US-A- 5 040 982

## Beschreibung

Die Erfindung betrifft ein mehrteiliges Zahnimplantat mit wenigstens einem proximalen Implantatsteil und einem distalen Implantatsteil, die so miteinander zu verbinden sind, dass sich im verbundenen Zustand der beiden Implantatsteile eine Verbindungsstelle ergibt. Zwischen den beiden Implantatsteilen ist ein ringförmiges Dichtelement vorgesehen.

Derartige Zahnimplantate sind beispielsweise aus DE 20 2005 015 074U DE 299 24 510U oder US 4, 756,689 bekannt. In all diesen Fällen dient ein distales Implantatsteil als künstliche Zahnwurzel, die an entsprechender Stelle in einen Kieferknochen eingeschraubt werden kann, bevor am distalen Implantatsteil ein proximales Implantatsteil und gegebenenfalls weitere Implantatsteile befestigt werden. Das proximale Implantatsteil dient in der Regel als Aufbauteilschaft und trägt eine künstliche Zahnkrone. Häufig sind distales und proximales Implantatsteil über eine Zylinderschraube miteinander verbunden.

DE 195 09 118 A1, worauf die zweiteilige from des Anspruchs 1 basiert, zeigt eine Zahnimplantatanordnung, die mit einem in den Kiefer einsetzbaren Implantatkörper und mit einem mittels eines bolzenartigen Halteelementes am Implantatkörper lösbar befestigbaren Aufbaukörper, auf den eine Brennkappe (41), ein Kronenersatz o. dgl. setzbar und fixierbar ist, versehen ist. Dabei ist vorgesehen, dass der Aufbaukörper gegenüber dem Implantatkörper in axialer und/oder sagittaler Richtung elastisch bewegbar gelagert ist.

An der Verbindungsstelle zwischen distalem und proximalem Implantatsteil ergibt sich das Problem, dass dort je nach Machart mehr oder weniger stark Bakterien eindringen und sich festsetzen können, die beispielsweise Entzündungen hervorrufen können.

Aufgabe der Erfindung ist es, ein mehrteiliges Zahnimplantat zu schaffen, das im Bereich der Verbindungsstelle so gestaltet ist, dass bekannte Nachteile möglichst vermieden werden.

Erfindungsgemäß wird diese Aufgabe durch ein Zahnimplantat - nachfolgend verkürzt auch als Implantat bezeichnet - der eingangs genannten Art gelöst, bei dem das Dichtelement ringförmig und elastisch ist und im fertig montierten Zustand des Zahnimplantats zwischen einander gegenüberliegenden Dichtflächen, nämlich einer Dichtfläche des proximalen Implantatsteils und einer Dichtfläche des distalen Implantatsteils, so eingespannt ist, dass das Dichtelement einen außen liegenden Oberflächenabschnitt aufweist, der einen Teil der Außenkontur des Zahnimplantats bildet, wobei die beiden Dichtflächen in einer von einer zentralen Längsachse des Zahnimplantats nach außen gerichteten Richtung konvergieren - also sich einander annähern - und die dort, wo in der Außenkontur des fertig montierten Zahnimplantats ein von Dichtelement gebildeter Oberflächenabschnitt jeweils an einem vom jeweiligen Implantatsteil gebildeten Oberflächenabschnitt angrenzt, jeweils in Außenflächen des Zahnimplantats übergehen, welche sich in der nach außen gerichteten Richtung voneinander entfernen, also divergieren.

Vorzugsweise weist eines der wenigstens zwei Implantatsteile einen in Bezug auf eine zentrale Längsachse des Zahnimplantats außen liegenden Dichtungssitz für das elastische, ringförmige Dichtelement auf. Dieser Dichtungssitz ist so gestaltet, dass er von wenigsten zwei in Umfangsrichtung umlaufenden Oberflächenabschnitten dieses einen Implantatsteils gebildet ist. Diese beiden umlaufenden Oberflächenabschnitte des einen Implantatsteils schließen in Bezug auf einen Längsschnitt durch dieses Implantatsteils einen Winkel zwischen sich ein, der eine Winkelhalbierende mit einer radial nach außen gerichteten Richtungskomponente besitzt, so dass der Dichtungssitz in Bezug auf die radiale Richtung nach außen offen ist. Die beiden in Umfangsrichtung umlaufenden Oberflächenabschnitte des Implantatsteils sind so gestaltet, dass sie das ringförmige Dichtelement aufgrund des von ihnen eingeschlossenen Winkels im verbundenen Zustand der beiden lmplantatsteile sowohl in eine dem anderen Implantatsteil zugewandten Längsteil als auch in Radialrichtung von innen abstützen oder unterstützen.

Das andere Implantatsteil besitzt wenigstens einen in Umfangsrichtung umlaufenden Oberflächenabschnitt, der so angeordnet und gestaltet ist, dass er das Dichtelement in verbundenem Zustand der beiden Implantatsteile in den Winkel drückt.

Weiterhin sind die beiden Implantatsteile vorzugsweise so gestaltet, dass das Dichtelement im verbundenen Zustand der beiden Implantatsteile einen Oberflächenabschnitt der Außenkontur des Zahnimplantats bildet, an dem sich in Längsrichtung des Zahnimplantats jeweils ein Oberflächenabschnitt des proximalen bzw. des distalen Implantatsteils anschließt. Jeder dieser Oberflächenabschnitte des einen oder des anderen Implantatsteils besitzt im Längsschnitt durch das verbundene Zahnimplantat dort, wo er den eine Außenkontur des Zahnimplantats bildenden Oberflächenabschnittes des Dichtelementes berührt, eine Tangente, so dass sich zwei Tangenten ergeben. Die beiden an das Dichtelement angrenzenden äußeren Oberflächenabschnitte der Implantatsteile sind so gestaltet, dass diese beiden Tangenten einen in Bezug auf das Implantat nach außen offenen Winkel zwischen sich einschließen.

Dies bewirkt, dass die Außenkontur des montierten Zahnimplantats keine Nischen oder Spalten aufweist, in denen sich Bakterien festsetzen können. Vielmehr liegt das Dichtelement - oder genauer: ein äußerer Oberflächenabschnitt des Dichtelementes bei fertig montiertem Zahnimplantat offen zutage.

Vorzugsweise besitzt das elastische Dichtelement im verbundenen Zustand der beiden Implantatsteile einen größeren Durchmesser als wenigstens eines der beiden Implantatsteile in unmittelbarer Nähe zum Dichtelement.

Weiter ist bevorzugt, dass die beiden Implantatsteile einander zugewandte Anschlagflächen aufweisen, die im verbundenen Zustand der beiden Implantatsteile aufeinander stoßen und dadurch das Maß der Kompression des elastischen Dichtelementes begrenzen. Diese Anschlagsflächen befinden sich dabei innerhalb der von dem Dichtelement geschlossenen Außenkonturen des Zahnimplantats.

Die Anschlagflächen verlaufen vorzugsweise jeweils in einer sowohl zur Längsachse des Zahnimplantats als auch zu einer jeweiligen Querschnittsebene des Zahnimplantats schrägen Fläche und dienen somit gleichzeitig als Längsanschlag und als Verdrehsicherung.

Weitere Details einer bevorzugten Gestaltung der Anschlagflächen können der Veröffentlichung WO 2007/031562 desselben Erfinders entnommen werden. Es sei hier insbesondere auf die Figuren 1 bis 12 und die zugehörige Beschreibung jener Veröffentlichung verwiesen.

Demnach ist es bevorzugt, wenn ein einen distalen Implantatsteil bildender distaler Teilschaft eine zu seinem proximalen Ende hin offene Längsöffnung mit einer Innenwandung aufweist, die eine Grundgeometrie mit kreisförmigen Querschnitt besitzt und in die v-förmige, sich wenigstens annähernd in Längsrichtung des Teilschaftes erstreckende, zum proximalen Ende des Teilschaftes hin offene Vertiefungen eingelassen sind. Ein einen proximalen Implantatsteil bildender Aufbauteilschaft besitzt an seinem distalen Ende einen Längsvorsprung mit einer Außenwandung mit einer Grundgeometrie mit kreisförmigem Querschnitt, die in die Längsöffnung des distalen Teilschaftes passt.

Die erfindungsgemäß gestalteten Dichtflächen für das Dichtelement umschließen jeweils die Längsöffnung bzw. den Längsvorsprung des jeweiligen Implantatsteils.

Vorzugsweise weist die Außenwandung des Aufbauteilschaftes im Bereich von dessen distalen Ende v-förmige Vorsprünge auf, die derart an die v-förmigen Vertiefungen des distalen Teilschaftes angepasst sind, dass Flankenabschnitte der v-förmigen Vertiefungen des distalen Teilschaftes mit Flankenabschnitten der v-förmigen Vorsprünge des Aufbauteilschaftes derart zusammenwirken, dass sich die v-förmigen Vorsprünge des Aufbauteilschaftes wie ein Keil in die v-förmigen Vertiefungen des distalen Teilschaftes hineinschieben, bis sich jeweils zwei Flanken eines v-förmigen Vorsprungs und zwei Flanken einer v-förmigen Vertiefung gegenseitig berühren und auf diese Weise die relative Position vom distalen Teilschaft und Aufbauteilschaft sowohl in axialer als auch in rotatorischer Richtung spielfrei fixieren, wenn der distale Teilschaft und der Aufbauteilschaft miteinander verbunden werden, beziehungsweise miteinander verbunden sind. Die einander berührenden Flanken wirken als Anschlagsflächen bilden einen definierten Höhenanschlag. Der Höhenanschlag wird durch eine definierte geometrische Form der Implantatsteile selbst dargestellt. Somit werden die von oben auf den proximalen Implantatsteil (proximaler Teilschaft) einwirkenden Kräfte lediglich auf den distalen Implantatsteil (distaler Teilschaft) übertragen. Würden die einwirkenden Kräfte nicht über den beschriebenen Höhenanschlag sondern über eine Dichtung abgeleitet werden, würde diese Dichtung über die Dauer der Verwendung zerstört werden.

Dabei bietet die Gestaltung des distalen Teilschaftes den Vorteil, dass er auch einen Aufbauteilschaft ohne v-förmige Vorsprünge aufnehmen kann, so dass die miteinander verbundenen Teilschäfte im Ergebnis zwar in axialer Richtung genauestens zueinander fixiert sind, nicht jedoch in rotatorischer Richtung. Dies ist insbesondere dann vorteilhaft, wenn der Schaft zur Befestigung eines Steges dient. Dann ist zur Aufnahme des Steges kein weiteres Element notwendig. Der behandelnde Arzt muss bei der Eingliederung nur ein einziges zusammenhängendes Element mit den im Mund des Patienten befindlichen Implantatfixatoren verschrauben.

Die Flanken der v-förmigen Vorsprünge bzw. Vertiefungen erstrecken sich in Bezug auf eine senkrecht zur Längsachse des Implantats verlaufende Querschnittebene vorzugsweise radial nach außen und verlaufen somit senkrecht zur Umfangsrichtung. Dadurch werden über die sich nach Montage des Implantats berührenden Flanken keine Radialkräfte übertragen, die beispielsweise einen distalen Teilschaft aus Keramik sprengen könnten.

Falls der distale Teilschaft aus einem zugfesteren Material wie z.B. Metall, insbesondere Titan, besteht, können die Flanken gegenüber der zuvor beschriebenen streng radialen Ausrichtung auch derart geneigt sein, dass zu einem jeweiligen Vorsprung des Aufbauteilschaftes (d.h. dem proximalen Implantatsteil) bzw. zu einer jeweiligen Vertiefung des distalen Teilschaftes (distaler Implantatsteil) gehörende Flanken in nach außen gerichteter Richtung aufeinander zulaufen. Die Flanken können beispielsweise gegenüber der radialen Richtung und damit auch gegenüber der Umfangsrichtung um 45° geneigt sein. Damit haben die Flanken nicht nur in Bezug auf die Rotationsrichtung, sondern auch in lateraler Richtung eine zentrierende Wirkung.

Die Grundgeometrie der Außenwandung des Aufbauteilschaftes ist vorteilhafter Weise wenigstens im Bereich der v-förmigen Vorsprünge konisch. Entsprechend ist vorteilhafter Weise auch die Grundgeometrie der Innenwandung der Längsöffnung des distalen Teilschaftes wenigstens im Bereich der v-förmigen Vertiefungen konisch.

Für bestimmte Anwendungsfälle und insbesondere, wenn der distale Teilschaft aus Keramik besteht, kann es vorteilhaft sein, wenn die Grundgeometrie der Außenwandung des Aufbauteilschaftes sowie auch die Grundgeometrie der Innenwandung der Längsöffnung des distalen Teilschaftes wenigstens im Bereich der v-förmigen Vertiefungen zylindrisch sind.

In beiden Fällen ist die Passung zwischen Außenwandung des Aufbauteilschaftes und Innenwandung des distalen Teilschaftes wenigstens im Bereich der v-förmigen Vertiefungen vorzugsweise eine Spielpassung.

Außerdem sind am distalen Teilschaft sowie am Aufbauteilschaft vorzugsweise jeweils vier v-förmige Vertiefungen, beziehungsweise v-förmige Vorsprünge vorgesehen, die gleichmäßig auf dem Umfang des jeweiligen Teilschaftes verteilt sind. Auf diese Weise ergeben sich in Rotationsrichtung zwischen distalen Teilschaft und Aufbauteilschaft vier genau definierte Positionierungsmöglichkeiten. Alternativ können auch mehr oder weniger Vorsprünge und Vertiefungen einander entsprechender Anzahl vorgesehen sein, die vorzugsweise über den Umfang des jeweiligen Teilschaftes gleichverteilt sind. Geeignete Anzahlen sind, z. B. 3, 6 oder 8.

Auch ein Vorsprung mit einer weit geöffneten V-Form (stumpfer V-Winkel) in Verbindung mit einer entsprechenden Vertiefung im distalen Teilschaft kann sinnvoll sein.

Als V-Winkel (Öffnungswinkel der jeweiligen V-Form) kommen Winkel zwischen 10° und 170° in Betracht. Im Sinne eine selbstzentrierenden Ausführungsform ist es vorteilhaft, wenn dabei der V-Winkel kleiner ist als der Spitzenwinkel des jeweiligen Reibungskegels, der sich aufgrund der Materialpaarung der sich im Bereich der einander gegenüberliegenden Flanken der v-förmigen Vorsprünge bzw. Vertiefungen ergibt.

Geeignete Materialien für den Dichtkörper sind biokompatible Kunststoffe, insbesondere Elastomere oder Duromere. Hierzu soll auch eine besonders geeignete Mischung aus Kautschuk und PTFE zählen. Diese Mischung enthält vorzugsweise Ruß als Füllstoff. Auch thermoplastische Elastomere und Elastomerlegierungen (z.B. Polypropylen aus der Gruppe der Polyolefine), Thermoplaste (z.B. Perfluorelastomere (PTFE, FKM, FFKM, FFPM) und Polyetheretherketon(PEEK)) und Duroplaste (Amino- oder Phenolplaste) oder ein Silikon kommen als elastischer Kunststoff für den Dichtkörper in Frage.

Von diesen Elastomeren ist FFKM, das als Basiswerkstoff PTFE enthält als Füllstoff Kieselsäure besonders geeignet. Eine Schwarzfärbung eines solchen Elastomers ist mit Ruß zu erzielen und eine Weißfärbung mit Titandioxid oder Bariumsulfat. Bereits Kieselsäure alleine kann für eine ausreichende Weißfärbung sorgen.

Besonders geeignet ist auch ein Dichtkörper, der zu großen Teilen von einem Elastomer gebildet ist, der auf seiner Außenseite mit einem Thermoplast oder einem Duromer, und zwar vorzugsweise mit PTFE, beschichtet ist. Hierbei hält das Elastomer die Spannung dauerhaft aufrecht und das PTFE ist mundbeständig und dichtet dauerhaft ab.

Ein anderes geeignetes Beschichtungsmaterial ist ein Dimer wie Diapraxylylen, das auch als Parylene bekannt ist und in einem Plasmabeschichtungsverfahren auf zu beschichtende Oberflächen aufgebracht werden kann. Geeignete Schichtdicken liegen zwischen 0,5µm und 50µm. Besonders geeignet sind Schichtdicken zischen 1µm und 5µm, z.B. 3µm. Im Folgenden sind beispielhaft Strukturformeln eines solchen Beschichtungsmaterials dargestellt:

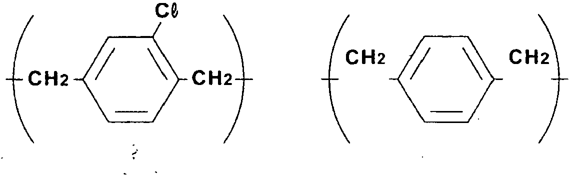

Die Oberfläche der Parylenebeschichtung oder auch des Kunststoffes (Dichtungsmaterials selbst) kann zusätzlich mit einer Nanobeschichtung von Metall wie Titan oder Silber - auch in Kombination mit einer Keramik; Siliziumdioxid, Calciumphosphat, Kohlenstoff - versehen werden. Die Beschichtung sorgt sowohl für eine Bakteriendichtigkeit und zugleich für ein neutrales Verhalten gegenüber dem Zellgewebe.

Bestandteil des Dichtungsmaterials kann auch Silber in Form von Mikro bzw. Nanopartikeln sein.

Die jeweils zu beschichtende Oberfläche ist vorzugsweise polarisiert, um deren Haftfähigkeit für die Beschichtung zu erhöhen. Eine derartige Polarisierung der Oberfläche kann auf grundsätzlich bekannte Weise mit Hilfe eines Plasmaverfahrens geschehen.

Weiterhin kann es vorteilhaft sein, Oberflächen des Implantats oder seiner Bestandteile, insbesondere die nach außen gewandte Oberfläche des Dichtkörpers zu polarisieren, um eine bessere Körperverträglichkeit zu erzielen. Durch eine Polarisierung wird erreicht, dass sich die angrenzenden Gewebe, wie z.B. Knochen und Zahnfleisch, nicht ablehnend gegenüber der Beschichtung verhalten bzw. verhalten können.

In Bezug auf einen ggf. teilweise beschichteten Dichtkörper ist es sinnvoll, wenn die beschichteten Flächen keine scharfen Kanten aufweisen. Vielmehr sollten alle beschichteten Kanten verrundet sein, um ein Abplatzen der Beschichtung beim Verformen des Dichtkörpers zu vermeiden.

Vorteilhaft ist es, wenn das elastische Material des Dichtkörpers um mindestens 5%, besser um mehr als 20%, elastisch dehnbar oder komprimierbar ist. In einem Ausführungsbeispiel ist beispielweise der durch die Anschlagsflächen vorgegeben Abstand zwischen den einander zugewandten Oberflächen der beiden Implantatsteile 250µm, so dass die Dichtung ein Nennmaß von 250µm hat. In diesem Fall sollte der Dichtkörper zum Beispiel 50µm über dem Nennmaß (250µm) der Dichtung gefertigt sein, so dass nach dem Zusammenbau bereits eine Kompression von 50µm (20% Kompression) entsteht. Diese Größen stellen ein angestrebtes Idealmaß dar. Die Bauhöhe der Dichtung sollte so gering wie möglich sein, um aus ästhetischen Gründen keine Bauhöhe für die spätere Zahnkrone zu verschenken; als Nennmaß kommen insbesondere Maße zwischen 0,1mm und 3 mm in Frage. Für die Bemessung ist entscheidend, dass die Dichtung auch unter Einwirkung von Kaukräften lediglich im Bereich Ihrer elastischen Verformbarkeit verformt wird und auch in Teilbereichen z.B. bei seitlicher Belastung immer um ein Mindestmaß komprimiert bleibt. Der Dichtkörper wird somit beim Zusammenfügen des Implantats lediglich um das notwendige Maß komprimiert, so dass die Implantat-Abutment-Verbindung unter allen möglichen Umständen eine Dichtigkeit gewährleistet. Das Maß der Kompression ist abhängig vom Material und von der Dicke des Materials, bei Einsatz einer größeren Bauhöhe der Dichtung könnte die Kompressionsmöglichkeit des Materials geringer ausfallen um die Bewegungen im Dichtungsbereich zu kompensieren.

Für einen bei Wärme expandierenden Dichtkörper sind insbesondere Kunststoffe mit einem hohen Wärmeausdehnungskoeffizienten von mehr als 75 x 10-6/K bei 20°C vorteilhaft.

Vorzugsweise ist wenigstens eine eine Außenfläche des Implantats bildende Außenfläche des Dichtkörpers mit einer Metall- oder Keramikschicht in zuvor beschriebener Weise beschichtet, wobei die Metall-Parylene oder Keramikschicht ein Eindringen von Bakterien in von der Metall- oder Keramikschicht bedeckte Dichtungsbestandteile verhindert. Besonders geeignet ist eine Nanobeschichtung, beispielsweise mit Titanpartikeln. Die Dichtfläche selbst kann unmittelbar aus einem biokompatiblen Kunststoff bestehen oder auf vorgenannte Art beschichtet sein. Als Material für die Metallschicht kommen vor allem Titan, Silber oder Gold, ggf. auch in Form eines Bestandteils einer Legierung in Frage. Alle Oberflächenmaterialien der Dichtungen sind mundbeständig und sterilisierbar und nehmen kein oder nur in sehr geringem Maße Wasser auf.

Der Dichtkörper kann neben elastischem Kunststoff auch eine Metallfeder oder ein separates Kunststofffederelement aus einem anderen Kunststoff, wie beispielsweise PEEK, enthalten. Das Federelement kann beispielsweise die Form einer Tellerfeder oder eines Ringes mit u-förmigem, nach innen offenen Querschnitt haben und stellt die dauerhafte Elastizität und Spannkraft des Dichtkörpers sicher. Eine Metallfeder kann insbesondere bei einem Dichtkörper vorteilhaft sein, bei dem der elastische Kunststoff wenigstens teilweise aus Polytetrafluorethylen (PTFE, Teflon), Polypropylen (PP) oder auch Polyethteretherketon (PEEK) besteht.

Die Erfindung soll nun anhand von Ausführungsbeispielen mit Bezug auf die Figuren näher erläutert werden. Von den Figuren zeigen:
- Fig. 1a:: Eine erste Variante eines zweiteiligen Zahnimplantats in geschnittener Darstellung;
- Fig. 1b:: eine Ausschnittsvergrößerung aus Fig. 1 a;
- Fig. 2a:: eine zweite Variante eines zweiteiligen Zahnimplantats in geschnittener Darstellung mit verpresstem Dichtring;
- Fig. 2b:: eine Ausschnittsvergrößerung des Dichtungssitzes des Zahnimplantats aus Fig. 2a;
- Figuren 3a und 3b:: teilweise geschnittene, perspektivische Darstellungen des Zahnimplantats aus Figuren 2a und 2b;
- Fig. 4a:: das zweiteilige Zahnimplantat aus den Figuren 2 und mit noch unverpresstem Dichtring im Längsschnitt;
- Fig. 4b:: eine Ausschnittsvergrößerung aus Fig. 4a;
- Figuren 5a und 5b:: perspektivisch geschnittene Darstellungen des Zahnimplantats aus den Figuren 4a und 4b;
- Fig. 6a:: eine dritte Variante eines zweiteiligen Zahnimplantats im Längsschnitt;
- Fig. 6b:: eine Ausschnittsvergrößerung aus Fig. 6a;
- Fig. 7:: eine perspektivische Außenansicht eines fertig montierten zweiteiligen Zahnimplantats gemäß der Erfindung;
- Fig. 8a:: eine vierte Variante eines zweiteiligen Zahnimplantats in längsgeschnittener Darstellung;
- Fig. 8b:: eine Ausschnittsvergrößerung aus Fig. 8a;
- Fig. 9:: den Dichtungssitz gemäßeiner fünften Variante eines zweiteiligen Zahnimplantats in einer Ausschnittsvergrößerung eines entsprechenden Längsschnitts;
- Fig. 10a:: eine sechste Variante eines zweiteiligen Zahnimplantats in längsgeschnittener Darstellung;
- Fig. 10b:: eine Ausschnittsvergrößerung des Dichtungssitzes aus der Darstellung gemäß Fig. 10a;
- Fig. 11a:: eine siebte Variante eines erfindungsgemäßen zweiteiligen Zahnimplantats in längsgeschnittener Darstellung;
- Fig. 11b:: eine Ausschnittsvergrößerung aus Fig. 11a zur Darstellung des Dichtungssitzes;
- Figuren 12a und 12b:: perspektivische, teilweise geschnittene Darstellungen des Zahnimplantats gemäß der Figuren 11a und 11b;
- Fig. 13a und 13b:: das zweiteilige Zahnimplantat gemäß der Figuren 11 und 12 in einer Darstellung mit unverpresstem Dichtring;
- Figuren 14a und 14b:: das Zahnimplantat gemäß der Figuren 11 bis 13 mit noch unverpresstem Dichtring in teilweise geschnittener, perspektivischer Darstellung;
- Figuren 15a bis 15f:: eine Darstellung der schrittweisen Verformung des Dichtrings bei der Montage des zweiteiligen Zahnimplantats gemäß der Figuren 11 bis 14, Fig. 15f zeigt einen nicht möglichen Zustand;
- Fig. 16a bis 16f:: verschiedene Abbildungen zur Erläuterung der Außenkontur eines zweiteiligen Zahnimplantats gemäß der Figuren 11 bis 15 während und nach Abschluss der Montage der beiden Implantatsteile.

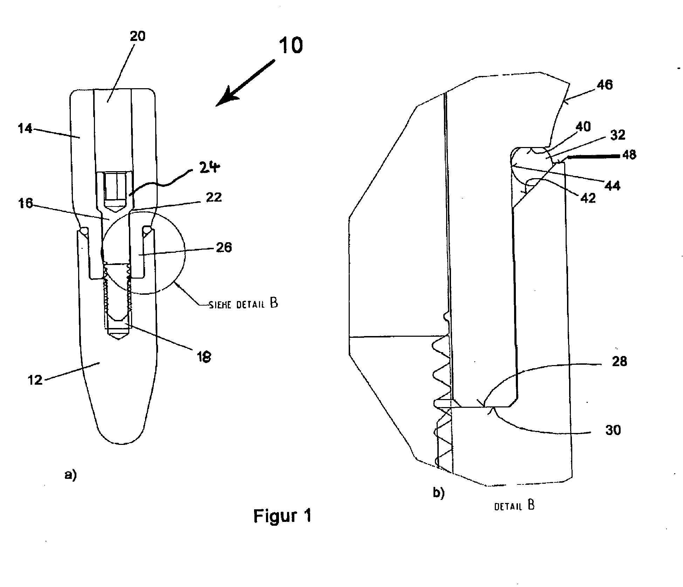

Fig. 1 zeigt eine erste Variante eines zweiteiligen Zahnimplantats 10. Das zweiteilige Zahnimplantat besitzt einen distalen Implantatsteil 12, auch distaler Teilschaft genannt, der eine künstliche Wurzel des Zahnimplantats 10 bildet und deshalb auch als Wurzelteilschaft bezeichnet wird.

Außerdem besitzt das Zahnimplantat 10 ein proximales Implantatsteil 14, das auch als proximaler Teilschaft oder Aufbauteilschaft bezeichnet wird. Der proximale Implantatsteil 14 dient zur Aufnahme einer künstlichen Zahnkrone (nicht abgebildet).

Wie Fig. 1a zu entnehmen ist, sind der distale Implantatsteil 12 und der proximale Implantatsteil 14 im dargestellten, fertig montierten Zustand über einen Schraubbolzen 16 miteinander verbunden. Dazu ist im distalen Implantatsteil 12 eine Sackbohrung 18 mit Innengewinde vorgesehen. Die Sackbohrung 18 verläuft entlang einer zentralen Längsachse des distalen Implantatsteils 12.

Im proximalen Implantatsteil 14 ist eine gestufte Längsbohrung 20 entlang einer Längsachse des proximalen Implantatsteils 14 vorgesehen. Die gestufte Längsbohrung 20 hat an ihrem proximalen Ende einen größeren Durchmesser als an ihrem distalen Ende, so dass sich eine Stufe in der Innenkontur der zentralen Längsbohrung 20 des proximalen Implantatsteils 14 ergibt. An dieser Stufe 22 kann sich ein Kragen eines Kopfes 24 des Schraubbolzens 16 abstützen, so dass der distale Implantatsteil 12 und der proximale Implantatsteil 14 in an sich bekannter Weise mit Hilfe eines Schraubbolzens miteinander verbunden werden können.

An ein proximales Ende der zentralen Sackbohrung 18 im distalen Implantatsteil 12 schließt sich eine Längsöffnung mit vergrößertem Innendurchmesser im distalen Implantatsteil 12 an. Diese Längsöffnung vergrößerten Durchmessers dient der Aufnahme eines distalen Abschnitts 26 des proximalen Implantatsteils 14. Eine Stirnfläche 28 des distalen Längsabschnitts 26 des proximalen Implantatsteils 14 stößt bei fertig montiertem Zahnimplantat 10 auf einen Boden 30 der Längsöffnung mit vergrößertem Durchmesser im distalen Implantatsteil 12. Dieser Boden 30 bildet somit einen Längsanschlag für die Annäherung zwischen distalem Implantatsteil und proximalem Implantatsteil 14 bei der Montage, die durch Einschrauben des Schraubbolzens 16 erfolgt.

Zu beachten ist, dass sich dieser Längsanschlag quasi im Inneren des fertig montierten Zahnimplantats 10 befindet. Die Außenkontur des fertig montierten Zahnimplantats 10 wird zwischen der Außenkontur des distalen Implantatsteils 12 und der Außenkontur des proximalen Implantatsteils 14 durch ein Dichtelement 32, auch Dichtkörper genannt, überbrückt. Das Dichtelement 32 hat die Form eines O-Rings mit rundem Querschnitt. Anstelle eines runden Querschnitts könnte das Dichtelement 32 auch einen ovalen Querschnitt haben.

Das Dichtelement 32 ist im montierten Zustand des Zahnimplantats 10, wie in Figuren 1a und 1b dargestellt ist, begrenzt komprimiert und besitzt einen entsprechend verformten Querschnitt. Um eine derartige Verformung zu erlauben, besteht das Dichtelement 32 ganz oder teilweise aus elastischem Material.

Durch den vom Boden der proximalen Längsöffnung im distalen Implantatsteil 12 einerseits und der Stirnfläche 28 des distalen Längsabschnitts des proximalen Implantatsteils 14 andererseits gebildeten Längsanschlag ist die Kompression und Verformung des Dichtelementes 32 begrenzt. Dies erlaubt es dem montierten Zahnimplantat 10, sich bei Biegebelastungen elastisch zu verformen, ohne dass Lücken oder Spalten in der Außenkontur des montierten Zahnimplantats 10 entstehen. Im Falle derartiger Biegebelastungen wird das Dichtelement 32 auf einer Seite des Zahnimplantats 10 belastet und weiter komprimiert und auf der gegenüberliegenden Außenseite des Zahnimplantats 10 entlastet und kann sich aufgrund seines vorkomprimierten Zustandes elastisch ausdehnen. Auf diese Weise wird eine Spaltbildung im Bereich der Außenkontur des zweiteiligen Zahnimplantats 10 sicher vermieden.

Das bisher Gesagte gilt im Übrigen für alle nachfolgend dargestellten Varianten des erfindungsgemäßen zweiteiligen Zahnimplantats, so dass diese Beschreibung für die nachfolgend beschriebenen Varianten nicht zu wiederholt zu werden braucht und die Figuren zu den nachfolgend beschriebenen Varianten des zweiteiligen Zahnimplantats die gleichen Bezugszeichen tragen wie sie für die erste Variante des zweiteiligen Zahnimplantats gemäß der Figuren 1 bis 3 verwendet wurden.

Die verschiedenen in dieser und den nachfolgenden Figuren dargestellten Varianten des zweiteiligen Zahnimplantats unterscheiden sich hinsichtlich der konkreten Gestaltung des jeweiligen Dichtungssitzes für das jeweilige Dichtungselement 32.

Allen nachfolgend beschriebenen Varianten ist gemein, dass der jeweilige Dichtungssitz jeweils von wenigstens zwei im Umfangsrichtung des Implantats umlaufenden Oberflächenabschnitten gebildet wird, die einen Winkel zwischen sich einschließen, in den hinein das jeweilige Dichtelement von einer umlaufenden Kante oder einem umlaufenden Oberflächenabschnitte des jeweils anderen Implantatteils gedrückt wird, wenn das Implantat fertig montiert ist.

Das Dichtelement und die den jeweiligen Dichtungssitz bildenden, umlaufenden Oberflächenabschnitte sind jeweils so bemessen und aufeinander abgestimmt, dass das Dichtelement bei fertig montiertem Implantat einen Teil von dessen Außenkontur bildet. Die jeweils an das Dichtelement angrenzende Außenkontur des fertig montierten Implantats wird von Außenflächen des Zahnimplantats gebildet, die sich in Bezug auf eine radial nach außen gerichtete Richtung voneinander entfernen. Das proximale und das distale Implantatsteil bilden jeweils eine dieser sich voneinander entfernenden Außenflächen.

Die nachfolgend näher dargestellten verschiedenen Varianten eines erfindungsgemäßen Zahnimplantats unterscheiden sich in der konkreten Ausgestaltung des jeweiligen Dichtungssitzes. Bei allen Varianten ist das jeweilige Dichtelement 32 zwischen sich einspannenden Dichtflächen so ausgebildet, dass sie sich in einer in Bezug auf das montierte Zahnimplantat radial nach außen gerichteten Richtung einander annähern. Eine der Dichtflächen, im Folgenden auch proximale Dichtfläche 40 genannt, wird dabei von dem proximalen Implantatsteil 14 gebildet, während die gegenüberliegende der beiden Dichtflächen im Folgenden auch als distale Dichtfläche 42 bezeichnet wird und vom distalen Implantatsteil 12 gebildet ist. Außerdem wird der Dichtungssitz von einer Stützfläche 42 definiert, die in den dargestellten Ausführungsbeispielen ebenfalls Teil des proximalen Implantatsteils 14 ist. Die proximale Dichtfläche 40 und die distale Dichtfläche 42 gehen jeweils in eine proximale Außenfläche 46 bzw. eine distale Außenfläche 48 über, die sich in Bezug auf eine radial nach außen gerichtete Richtung voneinander entfernen. Auf diese Weise wird sichergestellt, dass sich an der Verbindungsstelle zwischen proximalem Implantatsteil 14 und distalem Implantatsteil 12 keine Zwickel bilden, in denen sich beispielsweise Bakterien festsetzen können.

Wie bereit erwähnt unterscheiden sich die nachfolgend näher dargestellten Ausführungsvarianten dadurch, dass der von der jeweiligen proximalen Dichtfläche 40, der jeweiligen distalen Dichtfläche 42 und der jeweiligen Stützfläche 44 gebildete Dichtungssitz unterschiedlich gestaltet ist. Bei der Ausführungsvariante gemäß Fig. 1 verläuft die proximale Dichtfläche 40 in einer senkrecht zur Längsachse des Zahnimplantats 10 verlaufenden Ebene, während die Stützfläche 44 unmittelbar an die proximale Dichtfläche 40 angrenzt und die Form einer Zylindermantelfläche hat. Die von einem Teil einer Stirnfläche des distalen Implantatsteils 12 gebildete distale Dichtfläche 42 hat die Form eines Abschnitts einer Konusinnenfläche, wobei der virtuelle Konus eine Längs- bzw. Symmetrieachse besitzt, die mit der Längsachse des zweiteiligen Zahnimplantats 10 zusammenfällt. Auf diese Weise schließen die proximale Dichtfläche 40, die distale Dichtfläche 42 und die Stützfläche 44 einen Zwickel zwischen sich ein, in dem das komprimierte Dichtelement 32 im montierten Zustand des zweiteiligen Zahnimplantats fest eingeklemmt ist. Erfindungsgemäß ist der von der proximalen Dichtfläche 40, der distalen Dichtfläche 42 und der Stützfläche 44 eingeschlossene Zwickel im montierten Zustand des Zahnimplantats nach außen hin offen, so dass die Außenkontur des fertig montierten Zahnimplantats 10 von einer Außenfläche des komprimierten (verpressten) Dichtelements 32 überbrückt wird.

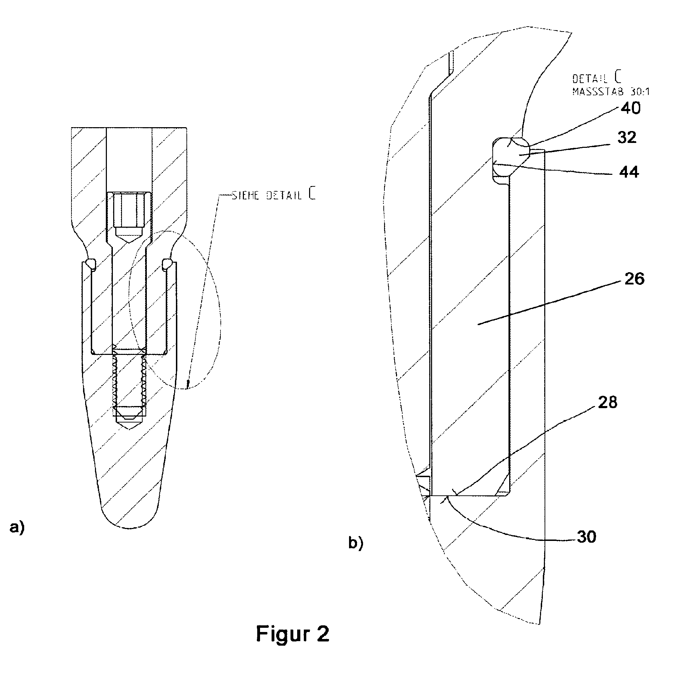

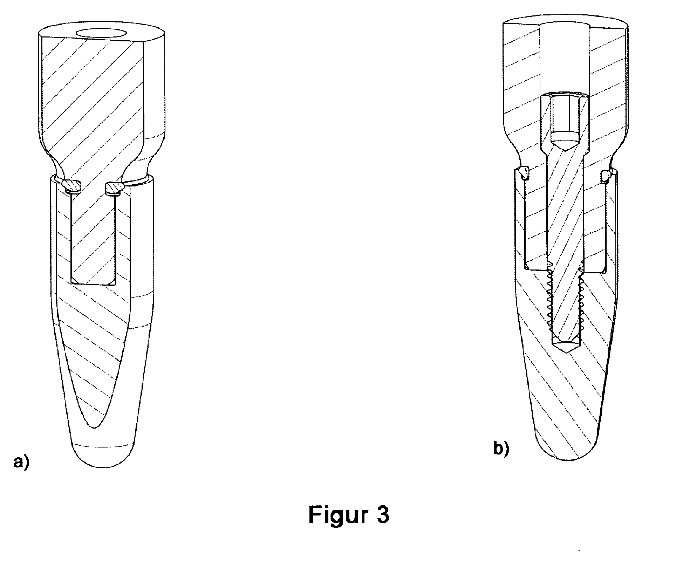

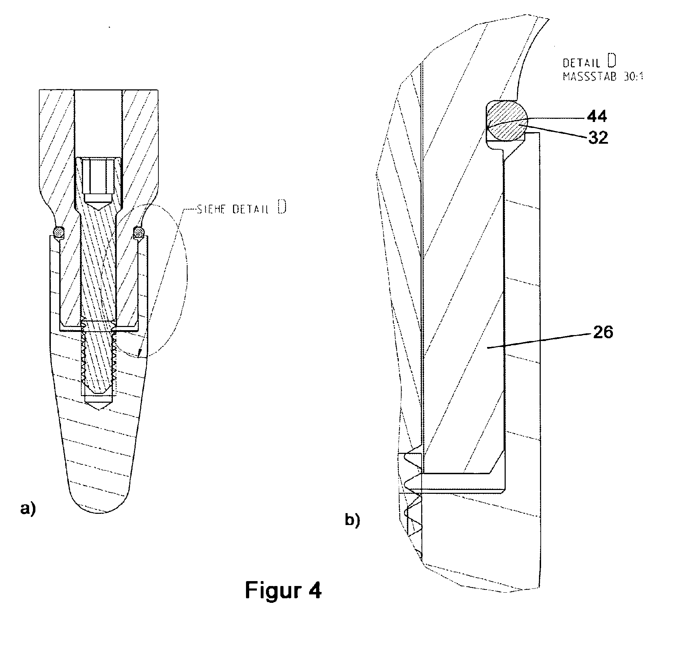

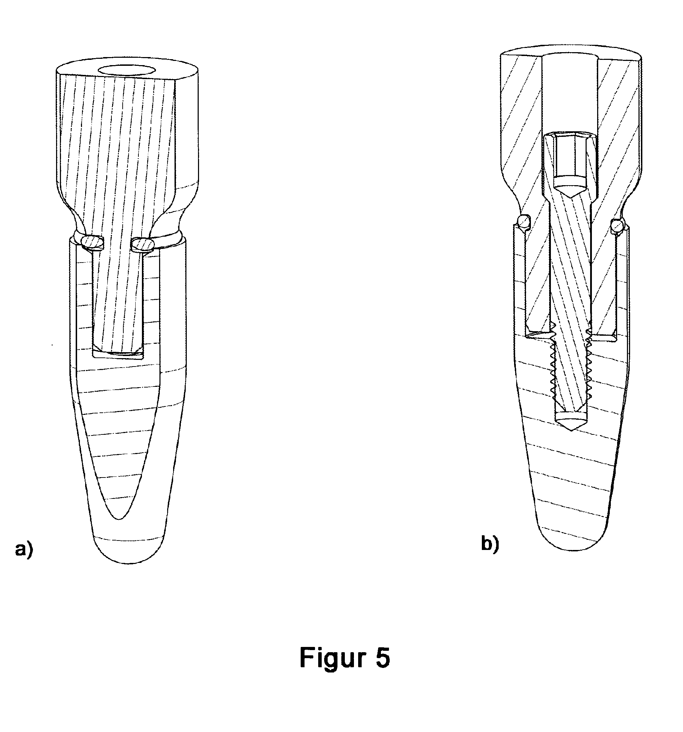

Die in den Figuren 2 bis 5 dargestellte zweite Variante eines zweiteiligen Zahnimplantates unterscheidet sich von der in Fig. 1 dargestellten ersten Variante lediglich dadurch, dass die Stützfläche 44 nicht glatt in die übrige Außenkontur des distalen Abschnitts 26 des proximalen Implantatsteil 14 übergeht, sondern gegenüber dieser übrigen Außenkontur einen geringeren Durchmesser besitzt, so dass sich eine Art Ringnut bildet, in die das Dichtelement 32 eingesetzt ist. Im Übrigen ist die zweite Variante des Zahnimplantats mit der ersten Variante des Zahnimplantats im Wesentlichen identisch. Zu beachten ist, dass die Figuren 2, 3a und 3b jeweils den fertig montierten Zustand des zweiteiligen Zahnimplantats in der zweiten Variante mit jeweils komprimiertem verpressten Dichtelement 32 zeigen, während die Figuren 4a, 4b, 5a und 5b einen Zustand der zweiten Variante des zweiteiligen Zahnimplantats zeigen, bei dem die Stirnfläche 28 des distalen Längsabschnitts des proximalen Implantatsteils 14 noch nicht auf den jeweiligen Boden 30 der Längsöffnung mit vergrößertem Durchmesser im distalen Implantatsteil 12 gestoßen ist, so dass der Längs- oder Höhenanschlag zwischen proximalem Implantatsteil 14 und distalem Implantatsteil 12 noch nicht wirksam geworden ist. Mit anderen Worten: In Figuren 4 und 5 sind das proximale Implantatsteil 14 und das distale Implantatsteil 12 noch nicht fertig montiert. Vielmehr zeigen diese Figuren einen Zustand, in dem das Dichtelement 32 noch nicht komprimiert und somit unverpresst ist.

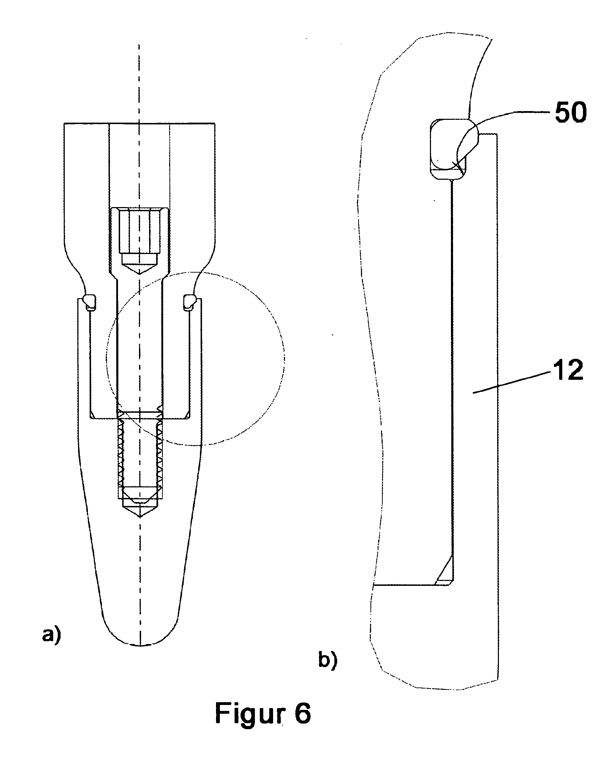

Die in Fig. 6 dargestellte dritte Variante eines zweiteiligen Zahnimplantats unterscheidet sich von der in Fig. 2 dargestellten zweiten Variante dadurch, dass die distale Dichtfläche 42 vergleichsweise kleinflächiger ausgebildet ist, wie Fig. 6 zu entnehmen ist. Dies wird durch eine entsprechende Ausnehmung 50 im Bereich des proximalen Endes des distalen Implantatsteils 12 bewirkt.

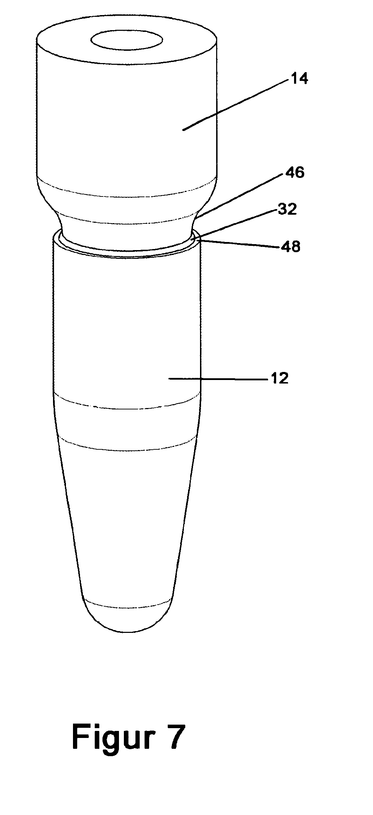

Fig. 7 verdeutlicht schließlich jenen Erfindungsaspekt, der darauf hinausläuft, dass das Dichtelement 32 im fertig montierten Zustand des zweiteiligen Zahnimplantats einen Teil von dessen Außenkontur bildet und zwischen zwei Außenflächen 46 und 48 des zweiteiligen Zahnimplantats angeordnet ist, die sich in radial nach außen gerichteter Richtung voneinander entfernen. Dadurch gibt es einen Versatz zwischen dem proximalen Implantatsteil 14 (Aufbau) und dem distalen Implantatsteil 12 (auch als Implantat bezeichnet). Wie zu erkennen ist, besitzt der proximale Implantatsteil 14 im Bereich der Verbindung zwischen proximalem und distalem Implantatsteil einen kleineren Durchmesser als der distale Implantatsteil 12. Alternativ könnten proximaler und distaler Implantatsteil 14 bzw. 12 auch so gestaltet sein, dass der proximale Implantatsteil 14 im Bereich der Verbindung zwischen den Implantatsteiten einen größeren Durchmesser besitzt als der distale Implantatsteil 12. Diese Variante ist in den Figuren nicht dargestellt.

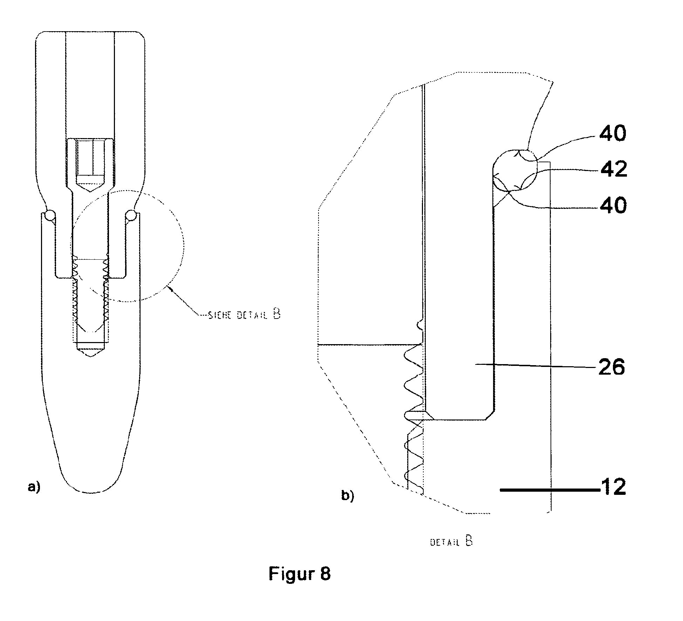

Fig. 8 zeigt schließlich eine vierte Variante eines zweiteiligen Zahnimplantats, bei der die proximale Dichtfläche 40 und die Stützfläche 44 so ausgebildet sind wie bei der ersten Variante. Im Unterschied zu den zuvor beschriebenen Varianten hat die distale Dichtfläche 42 jedoch nicht die Form einer Zylinderinnenfläche, sondern vielmehr die Form einer Hohlnut, die sich in einer schräg in proximaler Richtung und nach innen gerichteten Richtung öffnet. Die Hohlnut bildet die distale Dichtfläche 42 und gleichzeitig einen Aufnahmeraum für den Dichtring. Die Hohlnut ist konkav ausgeführt.

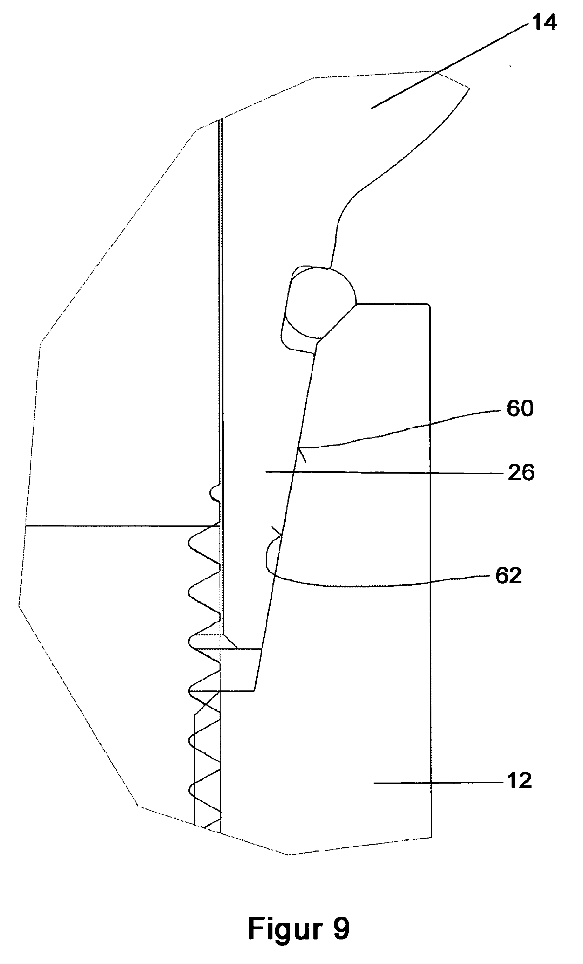

Fig. 9 zeigt schließlich eine fünfte Variante eines zweiteiligen Zahnimplantats, die in einiger Hinsicht große Ähnlichkeit mit der in den Figuren 2 bis 5 dargestellten zweiteiligen Variante des Zahnimplantats hat. Ein wesentlicher Unterschied gegenüber jener Variante besteht darin, dass der distale Längsabschnitt 26 des proximalen Implantatsteils 14 nicht zylinderförmig, sondern in distaler Richtung konisch verjüngend ausgebildet ist. Die Stützfläche 44 der fünften Variante des Zahnimplantats wird von einem Boden einer umlaufenden, nach außen offenen Nut zur Aufnahme des Dichtelements 32 gebildet und hat nicht die Form eines Zylindermantelabschnitts, sondern die Form eines Konusmantelabschnitts. Alternativ könnte die die proximale Dichtfläche 40 und die die Stützfläche 44 bildende Ringnut auch so ausgebildet sein, dass die Stützfläche 44 die Form eines Zylindermantelabschnitts hat und die proximale Dichtfläche 40 in einer zur Längsachse des Zahnimplantats senkrechten Ebene liegt.

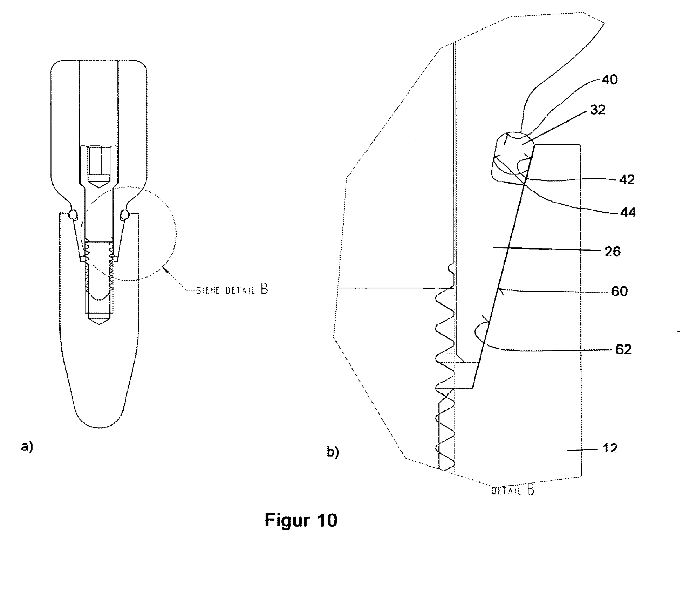

Eine Besonderheit der fünften Ausführungsvariante gemäß Figuren 9 und 10 besteht darin, dass aufgrund der konischen Mantelfläche 60 des distalen Längsabschnitts 26 des proximalen Implantatsteils 14 sowie der entsprechend ebenfalls innenkonusförmig ausgestalteten, gegenüberliegenden Innenfläche 62 des distalen Implantatsteil 14 diese konischen Flächen selbst den die Kompression des Dichtelements 32 begrenzenden Längsanschlag bilden.

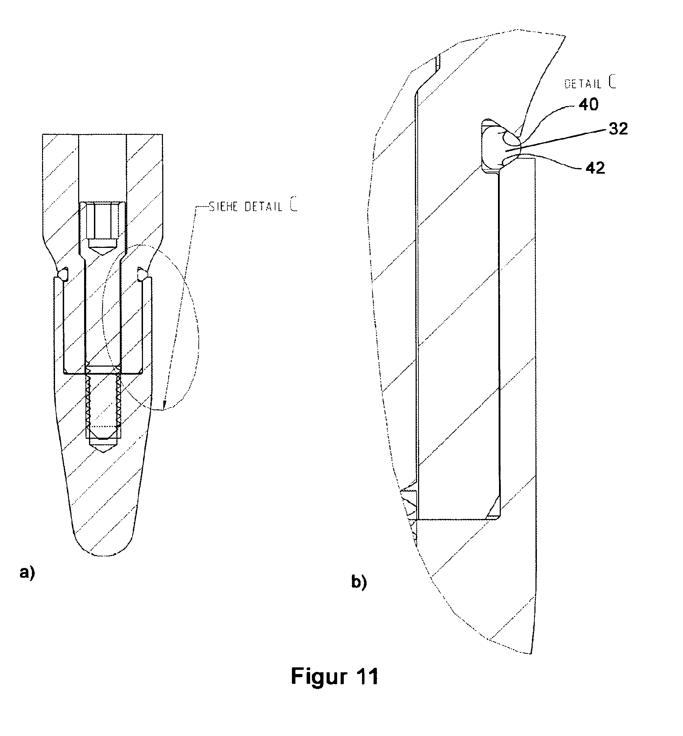

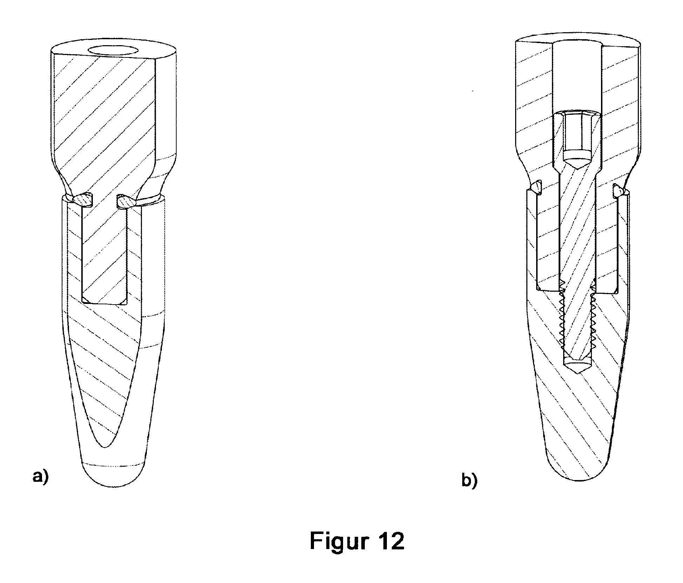

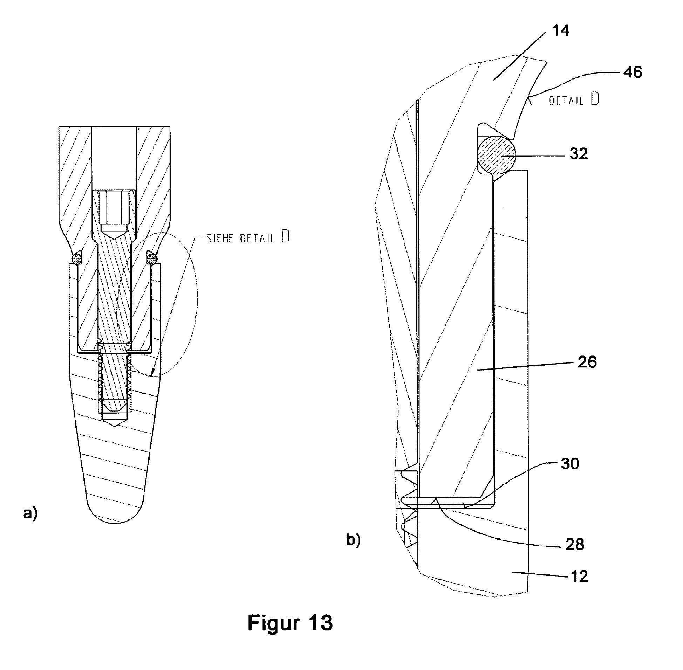

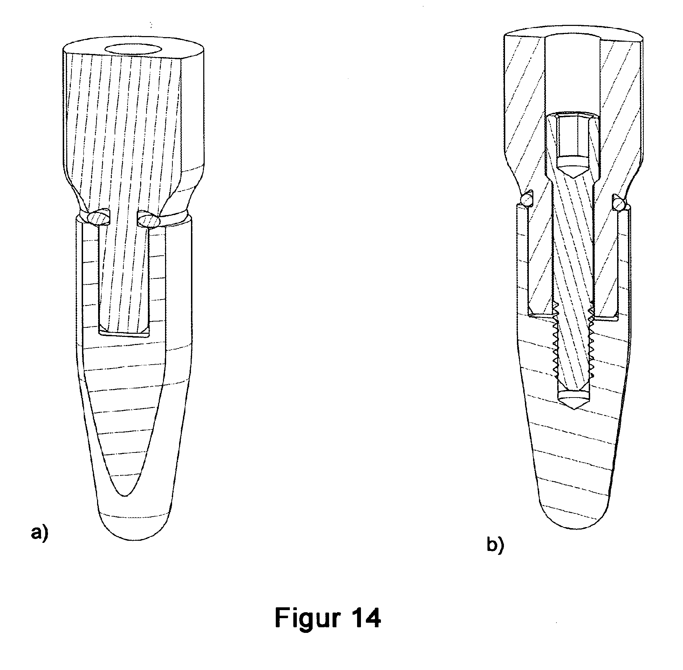

Die Figuren 11 bis 14 zeigen schließlich eine siebte Ausführungsvariante des zweiteiligen Zahnimplantats, die sich insbesondere von der zweiten Ausführungsvariante dadurch unterscheidet, dass die proximale Dichtfläche 40 im Längsschnitt schräg verläuft und ähnlich wie die distale Dichtfläche 42 die Form eines Längsabschnitts der Innenfläche eines Hohlkonus besitzt, so dass sich ein trapezförmiger Dichtungssitz ergibt Figuren 11a und 11b sowie 12a und 12b zeigen dabei jeweils das zweiteilige Zahnimplantat im fertig montierten Zustand mit komprimiertem verpressten Dichtelement 32 in verschiedenen Darstellungsweisen. Figuren 14a und 14b zeigen Details der siebten Ausführungsvariante des zweiteiligen Zahnimplantats in einem Zustand, in dem proximaler Implantatsteil 14 und distaler Implantatsteil 12 noch nicht fertig montiert sind, so dass die gegenüberliegenden Anschlagflächen noch nicht aufeinandergetroffen sind. Das Dichtelement 32 ist noch unkomprimiert.

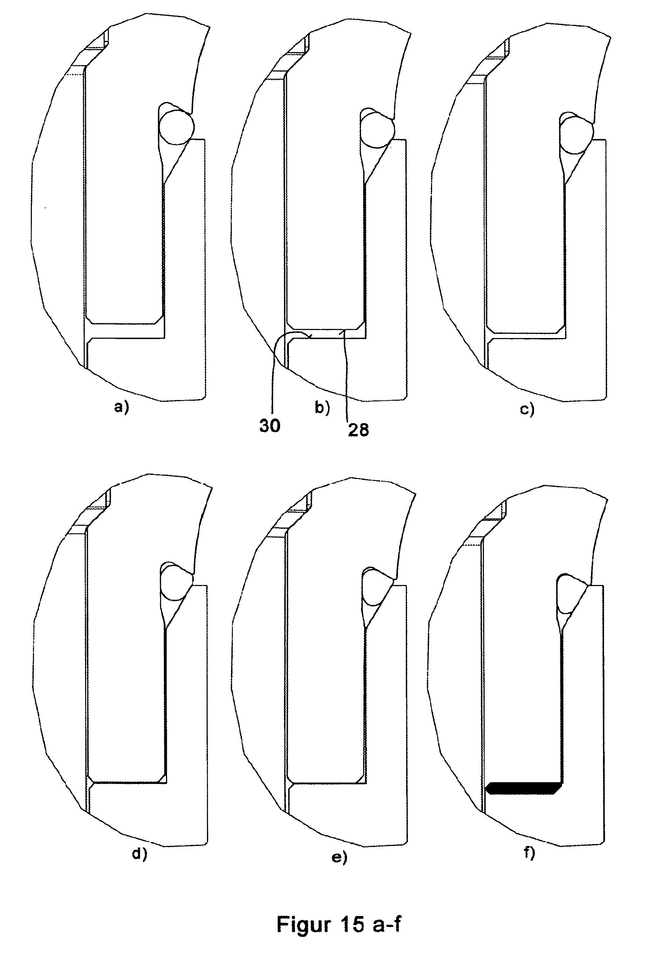

Die Figuren 15a bis 15f erläutern die Wirksamkeit des Längs- bzw. Höhenanschlags zwischen der Stirnfläche 28 des distalen Längsabschnitts 26 des proximalen Implantatsteils 14 und dem Boden 30 der Längsöffnung mit vergrößertem Durchmesser im distalen Implantatsteil 12. Figuren 15a bis 15d zeigen dabei, wie sich diese einander gegenüberliegenden Flächen bei der Montage der beiden Implantatsteile schrittweise annähern und das Dichtelement 32 immer weiter komprimiert wird, so lange, bis die beiden Flächen aufeinanderstoßen. Letzteres ist der Endzustand des fertig montierten zweiteiligen Zahnimplantats, der in Fig. 15e dargestellt ist.

Fig. 15f zeigt schließlich einen Zustand, den das zweiteilige Zahnimplantat nicht annehmen kann, da sich die Stirnfläche 28 und der Boden 30 - anders als virtuell in Fig. 15f dargestellt - nicht gegenseitig durchdringen können. Durch den von der Stirnfläche 28 in dem Boden 30 gebildeten Längsanschlag wird auch sichergestellt, dass das Dichtelement 32 nur begrenzt komprimiert wird und immer einen Teil der Außenkontur des Zahnimplantats bildet, wie insbesondere Fig. 15 nicht zu entnehmen ist.

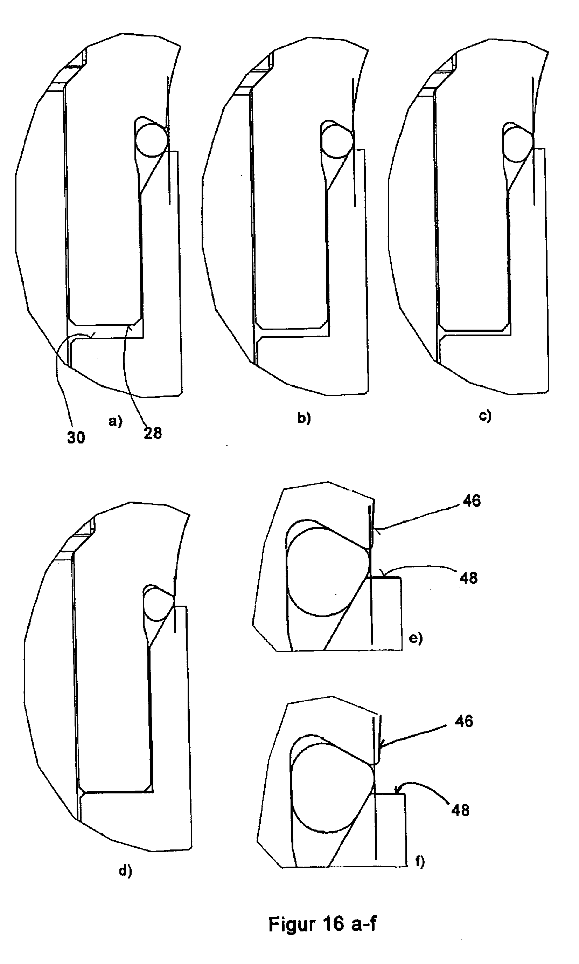

Fig. 16 zeigt ebenfalls, wie sich die beiden Implantatsteile bei der Montage schrittweise annähern, bis sie den Zustand in Fig. 16d annehmen. Die Details in Figuren 16e und 16f erläutern Varianten einer möglichen Außenkontur des fertig montierten zweiteiligen Zahnimplantats im Bereich der Verbindungsstelle zwischen proximalem Implantatsteil und distalem Implantatsteil. Insbesondere zeigen die Details in Figuren 16e und 16f, dass eine Außenfläche des Dichtelementes 32 - wenn überhaupt - nur geringfügig gegenüber den angrenzenden Außenflächen des proximalen und des distalen Implantatsteils zurückversetzt ist, so dass sich keine Spalten oder Zwickel bilden, die beim Zähneputzen nicht erreicht werden könnten oder in denen sich dauerhaft Bakterien festsetzen könnten.

## Patentansprüche

1. Mehrteiliges Zahnimplantat mit wenigstens einem proximalen Implantatsteil (14) und einem distalen Implantatsteil (12), die miteinander zu verbinden sind, so dass sich im verbundenen Zustand der beiden Implantatsteile (12, 14) eine Verbindungsstelle ergibt, wobei an dieser Verbindungsstelle ein ringförmiges Dichtelement (32) angeordnet ist, das im fertig montierten Zustand des Zahnimplantats zwischen einander gegenüberliegenden Dichtflächen (40, 42), nämlich einer Dichtfläche (40) des proximalen Implantatsteils (14) und einer Dichtfläche (42) des distalen Implantatsteils (12), so eingespannt ist, dass das Dichtelement (32) einen außen liegenden Oberflächenabschnitt aufweist, der einen Teil der Außenkontur des Zahnimplantats bildet,
wobei sich die beiden Dichtflächen (40, 42) in einer von einer zentralen Längsachse des Zahnimplantats nach außen gerichteten Richtung einander annähern, und wobei die beiden Dichtflächen (40, 42) dort, wo in der Außenkontur des fertig montierten Zahnimplantats ein vom Dichtelement (32) gebildeter Oberflächenabschnitt jeweils an einem vom jeweiligen Implantatsteil (12, 14) gebildeten Oberflächenabschnitt angrenzt, jeweils in Außenflächen des Zahnimplantats übergehen, welche sich in der nach außen gerichteten Richtung voneinander entfernen,
**dadurch gekennzeichnet, dass**
beide Implantatsteile dem jeweils anderen Implantatsteil zugewandte Anschlagflächen (28, 30) aufweisen, die bei fertig montiertem Zahnimplantat aufeinander stoßen und die das Maß der Kompression des Dichtelements (32) im verbundenen Zustand des Zahnimplantats definieren.

2. Mehrteiliges Zahnimplantat nach Anspruch 1, **dadurch gekennzeichnet, dass** das eine Implantatsteil (14) einen in Bezug auf eine zentrale Längsachse außen liegenden Dichtungssitz für das Dichtelement (32) aufweist, der von wenigstens zwei in Umfangsrichtung umlaufenden Oberflächenabschnitten (40, 44) dieses Implantatsteils (14) gebildet ist,
- die in Bezug auf einen Längsschnitt durch dieses Implantatsteil (14) einen Winkel zwischen sich einschließen, der eine Winkelhalbierende mit einer radial nach außen gerichteten Richtungskomponente besitzt, so dass der Dichtungssitz in radialer Richtung nach außen offen ist und
- die das ringförmige Dichtelement (32) aufgrund dieses Winkels im verbundenen Zustand der beiden Implantatsteile (12, 14) in eine dem anderen Implantatsteil (12) zugewandten Längsrichtung und in radialer Richtung von innen abstützen oder unterstützen, und
das andere Implantatsteil (12) einen in Umfangsrichtung umlaufenden Oberflächenabschnitt (42) besitzt, der das Dichtelement (32) im verbundenen Zustand der beiden Implantatsteile (12, 14) in den Winkel drückt,
wobei ein Oberflächenabschnitt des Dichtelementes (32) einen außen liegenden Teil der Außenkontur des Zahnimplantats im verbundenen Zustand bildet und die beiden an das Dichtelement (32) angrenzenden äußeren Oberflächenabschnitte der Implantatsteile (12, 14) so gestaltet sind, dass der freiliegende Oberflächenabschnitt des Dichtelementes (32) einen von außen frei zugänglichen Teil der äußeren Oberflächenkontur des fertig montierten Zahnimplantats bildet.

3. Mehrteiliges Zahnimplantat nach Anspruch 2, **dadurch gekennzeichnet, dass** sich an den freiliegenden Oberflächenabschnitt des Dichtelementes (32) in Längsrichtung des Zahnimplantats jeweils ein Oberflächenabschnitt des proximalen (14) bzw. des distalen (12) Implantatsteils anschließt,
wobei jeder dieser Oberflächenabschnitte des einen oder des anderen Implantatsteils (12, 14) im Längsschnitt durch das verbundene Zahnimplantat dort, wo er den eine Außenkontur des Zahnimplantats bildenden Oberflächenabschnittes des Dichtelementes (32) berührt, eine Tangente besitzt, so dass sich zwei Tangenten ergeben, und
wobei die beiden an das Dichtelement (32) angrenzenden äußeren Oberflächenabschnitte der Implantatsteile (12, 14) so gestaltet sind, dass diese beiden Tangenten einen in Bezug auf das Implantat nach außen offenen Winkel zwischen sich einschließen.

4. Implantat nach einem der Ansprüche 1 bis 3, **dadurch gekennzeichnet, dass** der größte Durchmesser des eine Außenkontur des Zahnimplantats bildenden Oberflächenabschnittes des Dichtelementes (32) dem Durchmesser einer an diesen Oberflächenabschnitt angrenzenden Umfangswandung (46) wenigstens eines der Implantatsteile wenigstens annähernd entspricht oder diesen übertrifft.

5. Implantat nach einem der Ansprüche 1 bis 4, **dadurch gekennzeichnet, dass** die Anschlagflächen schräg sowohl in Bezug auf eine Längsebene als auch in Bezug auf eine Querschnittsebene der Implantatsteile (12, 14) verlaufen.

6. Implantat nach einem der Ansprüche 1 bis 5, **dadurch gekennzeichnet, dass** das Dichtelement (32) im entspannten Zustand ein kreisringförmiger O-Ring ist und einen kreisförmigen Querschnitt besitzt.

7. Implantat nach einem der Ansprüche 1 bis 5, **dadurch gekennzeichnet, dass** das Dichtelement (32) als ein kreisringförmiger O-Ring ausgebildet ist und einen gestreckten, beispielsweise elliptischen Querschnitt besitzt.

## Claims

1. A multi-part tooth implant with at least a proximal implant part (14) and a distal implant part (12) that are to be connected to each other such that a connection portion is obtained when the two implant parts (12, 14) are in the connected state, wherein an annular sealing element (32) is arranged at this connection portion, which, in the fully assembled state of the tooth implant, is clamped between mutually opposite sealing surfaces (40, 42), namely a sealing surface (40) of the proximal implant part (14) and a sealing surface (42) of the distal implant part (12), such that the sealing element (32) has an outer surface portion that forms part of the outer contour of the tooth implant, wherein the two sealing surfaces (40, 42) approach each other in a direction oriented outwards from a central longitudinal axis of the tooth implant, and wherein the two sealing surfaces (40, 42) merge into respective outer surfaces of the tooth implant at the place where, in the outer contour of the fully assembled tooth implant, a surface portion formed by the sealing element (32) in each case adjoins a surface portion formed by the respective implant part (12, 14), which outer surfaces move away from each other in the outwardly oriented direction,
**characterized in that**
both implant parts have abutment surfaces (28, 30) facing the respective other implant part, which abutment surfaces abut or meet when the tooth implant is fully assembled and which define the degree of compression of the sealing element (32) in the connected state of the tooth implant.

2. The multi-part tooth implant of claim 1, **characterized in that**, with respect to a central longitudinal axis, the one implant part (14) has an outer sealing seat for the sealing element (32), which sealing seat is formed by at least two surface portions (40, 44) of said implant part (14) running in the circumferential direction,
- which with respect to a longitudinal cross-section through this implant part (14) enclose an angle between themselves which has an angle bisector with a directional component oriented radially towards the outside so that the sealing seat is open towards the outside in the radial direction, and
- which, in the connected state of the two implant parts (12, 14), in a longitudinal direction facing the other implant part (12) and in the radial direction, bear or support from the inside the annular sealing element (32) due to said angle, and
the other implant part (12) has a surface portion (42) running in the circumferential direction, which surface portion, in the connected state of the two implant parts (12, 14), presses the sealing element (32) into said angle, wherein a surface portion of the sealing element (32) forms an outer part of the outer contour of the tooth implant in the connected state and the two outer surface portions of the implant parts (12, 14) adjoining the sealing element (32) are designed such that the exposed surface portion of the sealing element (32) forms a part of the outer surface contour of the fully assembled tooth implant which is freely accessible from the outside.

3. The multi-part tooth implant of claim 2, **characterized in that**, at the exposed surface portion of the sealing element (32) in the longitudinal direction of the tooth implant, a respective surface portion of the proximal (14) and distal (12) implant parts, respectively, adjoins,
wherein, in the longitudinal cross-section through the connected tooth implant, each of said surface portions of the one or the other implant part (12, 14) at the place where it touches the surface portion of the sealing element (32) forming an outer contour of the tooth implant has a tangent so that two tangents result, and
wherein the two outer surface portions of the implant parts (12, 14) adjoining the sealing element (32) are designed such that said two tangents enclose between themselves an angle open towards the outside with respect to the implant.

4. The implant of any one of claims 1 to 3, **characterized in that** the largest diameter of the surface portion of the sealing element (32) forming an outer contour of the tooth implant at least approximately corresponds to or exceeds the diameter of a circumferential wall (46) adjoining said surface portion of at least one of the implant parts.

5. The implant of any one of claims 1 to 4, **characterized in that** the abutment surfaces run transversely both with respect to a longitudinal plane and with respect to a cross-sectional plane of the implant parts (12, 14).

6. The implant of any one of claims 1 to 5, **characterized in that** the sealing element (32), in the decompressed state, is a circular O ring and has a circular cross-section.

7. The implant of any one of claims 1 to 5, **characterized in that** the sealing element (32) is designed as a circular O ring and has an elongate cross-section, such as an elliptical cross-section.

## Revendications

1. Implant dentaire en plusieurs parties avec au moins une partie d'implant proximale (14) et une partie d'implant distale (12) qu'il s'agit de relier l'une à l'autre de telle façon que, dans la situation reliée des deux parties d'implant (12, 14) il en résulte un emplacement de liaison, et à cet emplacement de liaison est agencé un élément d'étanchement (32) de forme annulaire qui, dans la situation montée finie de l'implant dentaire, est enserré entre des surfaces d'étanchement (40, 42) opposées, à savoir une surface d'étanchement (40) de la partie d'implant proximale (14) et une surface d'étanchement (42) de la partie d'implant distale (12), de telle façon que l'élément d'étanchement (32) présente un tronçon de surface extérieure qui forme une partie du contour extérieur de l'implant dentaire,
dans lequel les deux surfaces d'étanchement (40, 42) se rapprochent l'une de l'autre dans une direction orientée vers l'extérieur depuis un axe longitudinal central de l'implant dentaire, et
dans lequel les deux surfaces d'étanchement (40, 42), à l'endroit où dans le contour extérieur de l'implant dentaire monté fini un tronçon de surface formé par l'élément d'étanchement (32) est respectivement adjacent à un tronçon de surface formée par la partie d'implant respective (12, 14), se transforment respectivement dans des surfaces extérieures de l'implant dentaire qui s'éloignent l'une de l'autre dans la direction orientée vers l'extérieur,
**caractérisé en ce que**
les deux parties d'implant présentent des surfaces de butée (28, 30) orientées respectivement vers l'autre partie d'implant, qui sont en butée l'une contre l'autre dans l'implant dentaire monté fini, et qui définissent le degré de compression de l'élément d'étanchement (32) dans la situation assemblée de l'implant dentaire.

2. Implant dentaire en plusieurs parties selon la revendication 1, **caractérisé en ce que** l'une des parties d'implant (14) comporte un siège d'étanchement, situé à l'extérieur par référence à un axe longitudinal central, pour l'élément d'étanchement (32), siège qui est formé par au moins deux tronçons de surface périphérique (40, 44) en direction périphérique de cette partie d'implant (14),
- lesquels définissant entre eux un angle, par référence à une coupe longitudinale à travers cette partie d'implant (14), qui possède une bissectrice avec une composante directionnelle orientée radialement vers l'extérieur, de sorte que le siège d'étanchement est ouvert vers l'extérieur en direction radiale, et
- qui, en raison de cet angle, dans la situation assemblée des deux parties d'implant (12, 14), supportent ou soutiennent l'élément d'étanchement annulaire (32) dans une direction longitudinale tournée vers l'autre partie d'implant, et depuis l'intérieur en direction radiale, et
l'autre partie d'implant (12) possède un tronçon de surface périphérique (42) en direction périphérique, qui pousse l'élément d'étanchement (32) dans l'angle dans la situation assemblée des deux parties d'implant (12, 14),
dans lequel un tronçon de surface de l'élément d'étanchement (32) forme dans la situation assemblée une partie extérieure du contour extérieur de l'implant dentaire, et les deux tronçons de surface extérieure, adjacents à l'élément d'étanchement (32), des parties d'implant (12, 14) sont conçus de telle façon que le tronçon de surface libre de l'élément d'étanchement (32) forme une partie librement accessible depuis l'extérieur du contour de surface extérieure de l'implant dentaire monté fini.

3. Implant dentaire en plusieurs parties selon la revendication 2, **caractérisé en ce qu'**un tronçon de surface respectif de la partie d'implant proximale (14) ou de la partie d'implant distale (12) fait suite au tronçon de surface libre de l'élément d'étanchement (32) en direction longitudinale de l'implant dentaire,
dans lequel chacun de ces tronçons de surface de l'une ou de l'autre partie d'implant (12, 14) possède, en coupe longitudinale à travers l'implant dentaire assemblé et à l'endroit où ils touchent le tronçon de surface qui forme un contour extérieur de l'implant dentaire, de l'élément d'étanchement (32), une tangente, de sorte qu'il en résulte deux tangentes, et
dans lequel les deux tronçons de surface extérieure, adjacents à l'élément d'étanchement (32), des parties d'implant (12, 14) sont ainsi conçus que ces deux tangentes définissent entre elles un angle ouvert vers l'extérieur par rapport à l'implant.

4. Implant selon l'une des revendications 1 à 3, **caractérisé en ce que** le plus grand diamètre du tronçon de surface formant un contour extérieur de l'implant dentaire, de l'élément d'étanchement (32), correspond au moins approximativement au diamètre d'une paroi périphérique (46), adjacente à ce tronçon de surface, d'au moins une des parties d'implant, ou dépasse ce diamètre.

5. Implant selon l'une des revendications 1 à 4, **caractérisé en ce que** les surfaces de butée s'étendent en oblique aussi bien par rapport à un plan longitudinal que par rapport à un plan de section transversale des parties d'implant (12, 14).

6. Implant selon l'une des revendications 1 à 5, **caractérisé en ce que** l'élément d'étanchement (32) est une bague torique à forme circulaire dans la situation détendue et possède une section transversale de forme circulaire.

7. Implant selon l'une des revendications 1 à 5, **caractérisé en ce que** l'élément d'étanchement (32) est réalisé comme une bague torique à forme circulaire et possède une section transversale étirée, par exemple elliptique.
